# FASCICULE DE BREVET EUROPEEN

(11) **EP 2 113 687 B1**
(45) Date de publication et mention de la délivrance du brevet: **18.08.2010**
(21) Numéro de dépôt: 09158680.0
(22) Date de dépôt: 24.04.2009
(51) Int. Cl.: F16H 45/02

(54) **Appareil d'accouplement hydrocinétique, notamment pour un véhicule automobile**
Hydrokinetisches Kupplungsgerät, insbesondere für Kraftfahrzeug
Hydrokinetic coupling device, in particular for an automobile

(30) Priorité: 29.04.2008 FR 0852888
(43) Date de publication de la demande: 04.11.2009
(73) Titulaire: Valeo Embrayages, 95892 Cergy Pontoise Cedex (FR)
(72) Inventeur: Arhab, Rabah, 95350 St Brice sous Forêt (FR); Termenon, Norberto, 75019 Paris (FR); Bacher, Michel, 13008 Marseille Cedex (FR)

(56) Documents cités:
- DE-A1-102006 008 754
- FR-A- 2 341 790
- JP-A- 2002 039 322
- US-A- 5 020 646
- US-A1- 2007 235 277

## Description

L'invention concerne un appareil d'accouplement hydrocinétique, notamment pour un véhicule automobile.

L'invention concerne plus particulièrement un appareil d'accouplement hydrocinétique, notamment pour un véhicule automobile, du type comportant au moins :
- un carter formé d'une première coquille, dite arrière, qui lie en rotation un arbre menant et une roue d'impulseur,
- une roue de turbine qui est solidaire en rotation, par une liaison sans jeu, d'une pièce apte à être liée
   en rotation à un arbre mené, et
- un embrayage de verrouillage du couplage des arbres menant et mené comportant un piston, mobile axialement pour lier, de manière débrayable, une deuxième coquille, dite avant, du carter à l'arbre mené, en serrant au moins un disque de friction, ledit au moins un disque de friction étant solidaire en rotation, d'une part, de la deuxième coquille avant du carter par l'intermédiaire d'une première pièce de liaison et, d'autre part, de l'élément d'entrée d'un dispositif d'amortissement par l'intermédiaire d'une deuxième pièce de liaison.

On connaît par exemple du document FR-A-2.839.128 un tel appareil d'accouplement hydrocinétique comportant une première pièce de liaison qui est rapportée par soudage sur la face radiale arrière de la coquille avant du carter de manière à lier en rotation ladite première pièce à la coquille avant du carter de l'appareil.

Une telle liaison par soudage entre la première pièce de liaison et la coquille avant du carter ne donne pas entière satisfaction, notamment en raison de la complexité de sa mise en oeuvre et de son coût.

En effet, la réalisation de la soudure est difficile en raison de la position du cordon de soudure à l'intérieur de la coquille du carter et elle nécessite de plus la mise en oeuvre de technique de soudage particulière afin d'éviter toute rupture car la première pièce de liaison est soumise en fonctionnement à des efforts importants.
Le document FR-A-2 341 790 décrit un appareil d'accouplement hydrocinétique selon le préambule de la revendication indépendante 1.

L'invention a notamment pour but de résoudre les inconvénients précités et de proposer une solution pour de lier solidairement en rotation la première pièce de liaison avec la coquille avant du carter qui soit simple et économique.

Dans ce but, l'invention propose un appareil d'accouplement hydrocinétique du type décrit précédemment, caractérisé en ce que la deuxième coquille avant du carter comporte au moins deux parties distinctes constituées respectivement par une première partie de coquille, dite inférieure, et une deuxième partie de coquille, dite supérieure, qui relie la première partie inférieure de coquille à la première coquille arrière du carter et en ce que la première pièce de liaison, destinée à lier sélectivement en rotation la deuxième coquille avant du carter audit au moins un disque de friction de l'embrayage de verrouillage, est venue de matière avec l'une des deux parties de coquille formant la deuxième coquille avant du carter.

Grâce à l'invention, la première partie inférieure de coquille et la deuxième partie supérieure de coquille formant la deuxième coquille avant du carter sont susceptibles d'être liées solidairement en rotation par tout moyen, en particulier par soudage, tel que par soudage à l'arc.

Avantageusement, la première pièce de liaison présente une bonne tenue mécanique, notamment aux efforts appliqués en fonctionnement lors de la transmission du couple, les risques de rupture de la liaison par soudage sont supprimés dès lors que la première pièce est venue de matière avec la coquille avant.

L'invention offre une grande liberté de conception de l'appareil, notamment dans l'agencement de l'embrayage de verrouillage, la première pièce de liaison étant susceptible d'être agencée librement selon la direction radiale, c'est à une hauteur déterminée selon qu'elle est venue de matière à partir de la première partie inférieure ou de la deuxième partie supérieure de coquille de la coquille avant du carter.

Avantageusement, on optimise le diamètre des garnitures de friction en fonction du couple ou encore la compacité axiale de l'appareil.
Selon l'invention, la première pièce de liaison est formée par pliage d'une extrémité supérieure de la première partie inférieure de la deuxième coquille avant du carter ou d'une extrémité inférieure de la deuxième partie supérieure de la deuxième coquille avant du carter, ladite extrémité étant repliée axialement vers l'arrière en direction de la première coquille arrière du carter pour former la première pièce de liaison, avant de lier ensemble la première partie inférieure et la deuxième partie supérieure de la deuxième coquille avant du carter.

Selon d'autres caractéristiques de l'invention :
- la première pièce de liaison est venue de matière avec la première partie inférieure de la deuxième coquille avant du carter ;
- la première pièce de liaison est venue de matière avec la
   deuxième partie supérieure de la deuxième coquille avant du carter ;
- la première pièce de liaison forme une couronne annulaire qui s'étend axialement vers l'arrière globalement et orthogonalement par rapport à au moins une portion d'orientation radiale de la deuxième coquille avant du carter, ladite portion radiale appartenant à la première partie inférieure de coquille et/ou à la deuxième partie supérieure de coquille ;
- la partie inférieure ou supérieure de la deuxième coquille avant du carter dont la première pièce de liaison est venue de matière, comporte un tronçon coudé qui relie la portion radiale de la partie inférieure ou supérieure de coquille à ladite extrémité supérieure ou inférieure s'étendant axialement vers l'arrière pour former la première pièce de liaison ;
- lorsque la première pièce de liaison est réalisée en une seule pièce avec la première partie inférieure de coquille, l'extrémité inférieure de la deuxième partie supérieure de coquille de la deuxième coquille avant du carter est d'orientation radiale et solidaire du tronçon coudé de la première partie inférieure de la deuxième coquille avant du carter ou, lorsque la première pièce de liaison est réalisée en une seule pièce avec la deuxième partie supérieure de coquille, l'extrémité supérieure de la première partie inférieure de coquille de la deuxième coquille avant du carter est d'orientation radiale et solidaire du tronçon coudé de la deuxième partie supérieure de coquille de la deuxième coquille avant du carter ;
- l'extrémité radiale de la partie supérieure ou inférieure de la deuxième coquille avant du carter est respectivement soudée, notamment par soudage à l'arc de type « MIG » ou « TIG », à l'autre partie inférieure ou supérieure de la deuxième coquille avant du carter comportant la première pièce de liaison ;
- la première pièce axiale de liaison comporte une face annulaire interne munie circonférentiellement d'une denture qui s'étend radialement et qui est apte à coopérer par engrènement avec une denture complémentaire que comporte des flasques de l'embrayage de verrouillage ;
- au moins la première pièce de liaison comporte des perçages radiaux qui sont aptes à permettre à l'huile contenue dans le carter de circuler radialement de haut en bas à travers l'embrayage de verrouillage, à travers la première pièce de liaison et en direction de la deuxième pièce de liaison, de manière à refroidir des surfaces de friction dudit au moins un disque de friction et des flasques de l'embrayage de verrouillage ;
- la deuxième pièce de liaison comporte des perçages radiaux qui sont aptes à permettre, à travers la deuxième pièce de liaison, la circulation radiale de l'huile traversant l'embrayage de verrouillage pour le refroidir, soit les surfaces de friction dudit au moins un disque de friction et des flasques ;
- les perçages radiaux de refroidissement sont agencés axialement dans la première pièce de liaison et/ou la deuxième pièce de liaison de manière à être radialement globalement à l'aplomb des surfaces de friction dudit au moins un disque de friction et des flasques de l'embrayage de verrouillage et les perçages sont répartis circonférentiellement de manière régulière sur la première pièce de liaison et/ou la deuxième pièce de liaison.

D'autres caractéristiques et avantages de l'invention apparaîtront à la lecture de la description détaillée qui suit pour la compréhension de laquelle on se reportera aux dessins annexés dans lesquels :
- la figure 1 est une demi-vue en coupe axiale qui représente un appareil d'accouplement hydrocinétique et qui illustre un exemple de réalisation d'une coquille avant de carter et d'une première pièce de liaison conformément aux enseignements de l'invention ;
- la figure 2 est une vue de côté qui représente partiellement l'appareil selon la figure 1, et qui illustre l'exemple de réalisation de l'invention, en l'absence de la deuxième pièce de liaison destinée à être reliée à l'élément d'entrée du dispositif d'amortissement ;
- la figure 3 est une demi-vue en coupe axiale analogue à la figure 1 qui représente un appareil d'accouplement hydrocinétique selon l'invention et qui, établie suivant une section III-III décalée angulairement par rapport à la section I-I de la figure 1, illustre notamment les perçages radiaux pour le refroidissement des garnitures de friction de l'embrayage de verrouillage par circulation d'huile ;
- la figure 4 est une vue en perspective analogue à la figure 2.

Afin de faciliter la compréhension de la description et des revendications, on utilisera à titre non limitatif, des orientations « avant » et « arrière », « axiale » et « radiale » ou « supérieure » et « inférieure » définies dans la description, notamment par rapport au trièdre (L, V, T) représenté sur les figures.

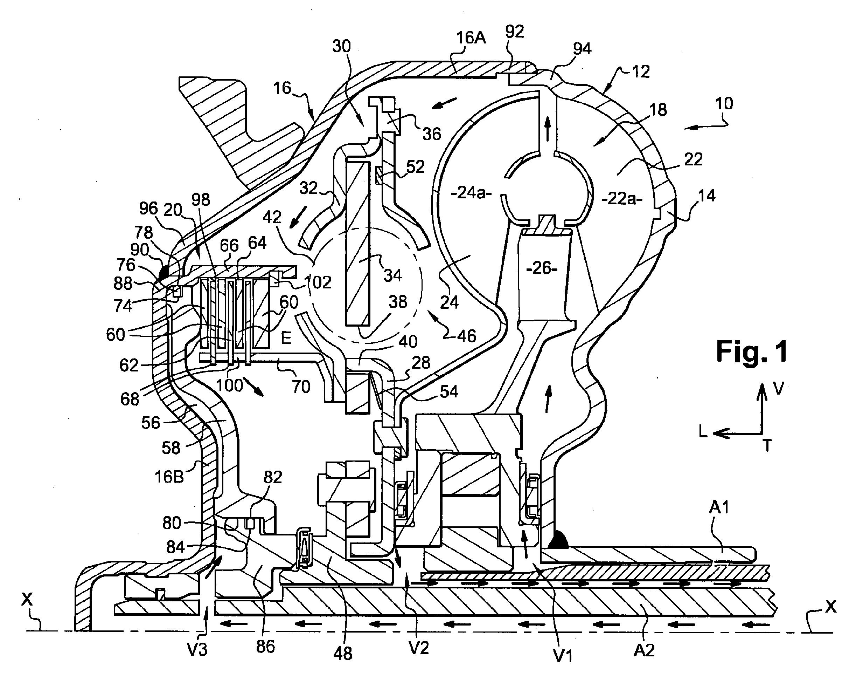

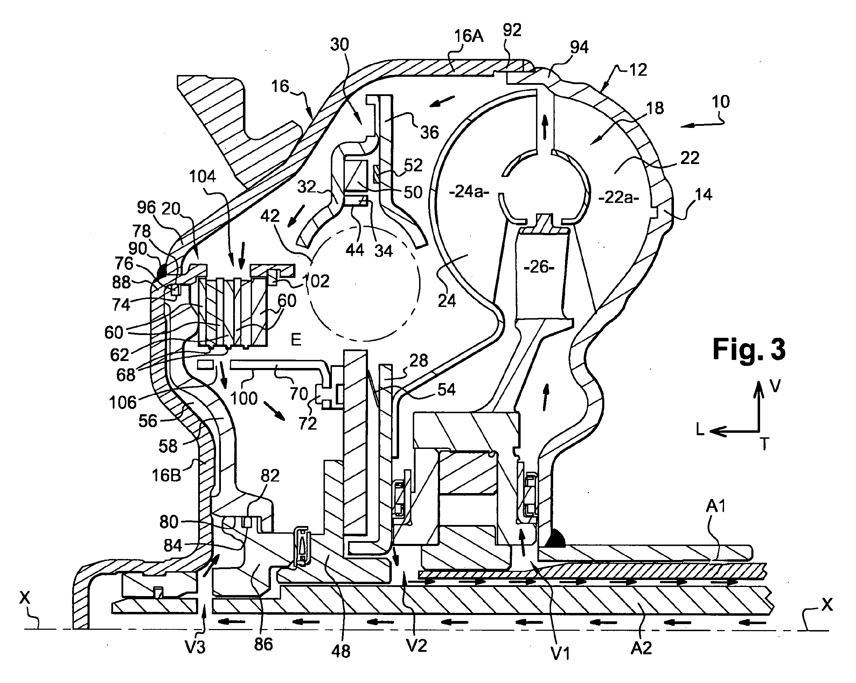

Les orientations « avant » et « arrière » correspondent respectivement à la gauche et à la droite de la figure 1 ou 3 suivant l'axe de rotation X-X de l'appareil qui, s'étendant longitudinalement, détermine l'orientation « axiale » par opposition à l'orientation « radiale » qui lui est orthogonale et qui s'étend verticalement selon le trièdre (L, V, T).

Les termes « supérieur » et « inférieur » sont utilisés pour définir la position relative d'un élément par rapport à un autre, par référence à l'axe principal X-X, un élément proche de l'axe est ainsi qualifié d'inférieur par comparaison à un élément supérieur situé radialement plus en périphérie.

Dans la description qui suit, les éléments identiques, similaires ou analogues seront désignés par les mêmes chiffres de référence.

On a représenté à la figure 1, un appareil d'accouplement hydrocinétique 10 d'axe principal X-X selon un exemple de réalisation de l'invention.

L'appareil d'accouplement hydrocinétique 10 comporte un carter 12 étanche qui, rempli d'un fluide tel que de l'huile, est formé d'au moins deux éléments globalement en forme de coquille, respectivement une première coquille 14, dite coquille arrière, et une deuxième coquille 16, dite coquille avant.

Les coquilles arrière 14 et avant 16 du carter 12 délimitent un volume de l'appareil 10 à l'intérieur duquel sont principalement agencés un convertisseur de couple 18 et un embrayage de verrouillage 20.

Le convertisseur de couple 18 comporte une roue d'impulseur arrière 22, une roue de turbine avant 24 et, de préférence, une roue de réaction centrale 26.

La roue d'impulseur 22 comporte des aubes 22a qui sont portées par la coquille arrière 14, laquelle est solidaire en rotation de l'autre coquille avant 16 du carter 12.

La coquille arrière 14 est apte à être liée en rotation à un arbre menant A1. La roue de turbine 24 comporte aussi des aubes 24a qui font face axialement aux aubes 22a de la roue d'impulseur 22.

La roue de turbine 24 est liée en rotation à un arbre mené A2, coaxial à l'axe principal X-X de l'appareil 10, ici directement par l'intermédiaire d'une pièce de liaison 28 formée ici par l'une des rondelles de guidage d'un dispositif d'amortissement 30.

Dans le cas d'une application à un véhicule automobile, l'arbre menant A1 est constitué par le vilebrequin du moteur à combustion interne du véhicule, tandis que l'arbre mené A2 est constitué par l'arbre d'entrée de la transmission du véhicule, conventionnellement relié à des moyens de changement de rapport de vitesse.

La roue de turbine 24 est ici solidaire en rotation de la rondelle de guidage arrière 28 par une liaison sans jeu réalisée par rivetage.

Bien entendu, la liaison entre la roue de turbine 24 et la pièce de liaison 28 peut être réalisée par tous moyens, par exemple par soudage ou par sertissage.

Le dispositif d'amortissement 30, ou amortisseur, comporte un élément d'entrée constitué par les rondelles de guidage, respectivement la rondelle de guidage arrière 28 formant la pièce liée en rotation sans jeu à la roue de turbine 24 et une rondelle de guidage avant 32.

Le dispositif d'amortissement 30 comporte encore un élément de sortie constitué par au moins un voile 34.

En variante non représentée, la roue de turbine 24 est liée en rotation à un moyeu de turbine qui est apte à être lié en rotation à un arbre mené A2, coaxial à l'axe principal X-X de l'appareil 10, par l'intermédiaire du dispositif d'amortissement 30.

Le moyeu de turbine est alors prévu pour être lié en rotation à l'arbre mené A2 par l'intermédiaire du dispositif d'amortissement 30, généralement par la rondelle de guidage arrière formant l'élément d'entrée du dispositif d'amortissement 30 à laquelle le moyeu de turbine est lié en rotation sans jeu par engrènement.

Les rondelles de guidage 28, 32 sont solidaires à rotation l'une de l'autre par leurs bords périphériques supérieurs, par exemple ici au moyen de rivets 36, tels que des rivets extrudés.

Le voile 34 formant l'élément de sortie du dispositif d'amortissement 30 comporte des encoches 38 de butée, qui sont prévues chacune pour permettre le débattement angulaire d'au moins une patte axiale 40 associée que comporte la rondelle de guidage arrière 28.

Chaque encoche 38 comporte deux bords radiaux opposés circonférentiellement qui forment des surfaces de butée pour la patte axiale 40 associée.

La venue en butée des pattes 40 contre les surfaces de butée détermine donc une position angulaire relative, dite de butée, entre les rondelles de guidage 28, 32 et le voile 34.

Avantageusement, les pattes 40 de la rondelle de guidage arrière 28 assurent encore une fonction d'entretoise qui participe au positionnement axial des pièces du dispositif d'amortissement 30, en particulier du voile 34 par rapport aux rondelles de guidage 28, 32.

Le couple transmis par la roue de turbine 24 est directement transmis aux rondelles de guidage 28, 32, formant l'élément d'entrée de l'amortisseur, puis au voile 34, formant l'élément de sortie de l'amortisseur, par l'intermédiaire d'organes élastiques 42 à action circonférentielle, et cela après un débattement angulaire des rondelles de guidage 28, 32 par rapport au voile 34 déterminé par ladite position angulaire de butée.

Les organes élastiques 42 à action circonférentielle sont interposés entre les rondelles de guidage 28, 32 et le voile 34. Pour ce faire, le voile 34 comporte des fenêtres 44 dans lesquelles sont montés les organes élastiques 42.

Les rondelles de guidage comprennent aussi chacune une partie centrale de guidage qui est munie de fenêtres 46 agencées axialement au droit des fenêtres 44 du voile.

Les organes élastiques 42 sont en appui respectivement sur les bords radiaux des fenêtres 46 des rondelles de guidage 28, 32 et sur les bords radiaux des fenêtres 44 du voile 34. Les organes élastiques 42 sont maintenus axialement par les bords d'orientation circonférentielle des fenêtres 46 des rondelles de guidage 28, 32.

Les organes élastiques 42 sont sollicités circonférentiellement entre les éléments d'entrée 28, 32 et de sortie 34 du dispositif d'amortissement 30, dans la mesure d'un débattement angulaire relatif déterminé par le déplacement circonférentiel des pattes axiales 40 du voile 34 dans les encoches 38 des rondelles de guidage 28, 32, jusqu'à la position angulaire de butée.

Le voile 34 est solidaire en rotation d'un moyeu de sortie 48, ici par rivetage en variante par engrènement sans jeu, le moyeu de sortie 48 étant lié en rotation avec l'arbre mené A2, par exemple par l'intermédiaire de cannelures.

Bien entendu, selon une variante de réalisation (non représentée), le voile 34, formant l'élément de sortie du dispositif d'amortissement 30, peut être réalisé en une seule pièce avec le moyeu de sortie 48.

De préférence, le dispositif d'amortissement 30 comporte différents organes élastiques 42 à action circonférentielle qui sont reliés par l'intermédiaire d'une rondelle, dite de phasage, 50 qui assure la continuité de la transmission du couple transmis, par l'intermédiaire des organes 42, des rondelles de guidage 28, 32 formant l'élément d'entrée au voile 34 formant l'élément de sortie.

Avantageusement, le dispositif d'amortissement 30 comporte une rondelle de frottement 52, encore dite d'hystérésis, qui est agencée axialement entre la rondelle de guidage arrière 28 et la rondelle de phasage 50.

Avantageusement, le dispositif d'amortissement 30 comporte au moins une rondelle élastique 54 qui est interposée axialement entre le voile 34 et la rondelle de guidage arrière 28.

La rondelle élastique 54 à effet axial est par exemple une rondelle tronconique qui est circonférentiellement en appui de manière continue sur chaque face en vis-à-vis, respectivement du voile 34 et de la rondelle de guidage arrière 28.

La rondelle élastique 54 participe au bon positionnement axial des rondelles de guidage 28, 32 et du voile 34. La rondelle élastique 54 est avantageusement traitée pour en améliorer la dureté, par exemple par carbonitruration, et ses bords - en appui sur les faces du voile 34 et de la rondelle de guidage arrière 28 - sont de préférence arrondis de manière à éviter toute détérioration des surfaces de contact.

L'appareil d'accouplement hydrocinétique 10 comporte, à l'avant, une chambre étanche 56, qui est délimitée axialement par la coquille avant 16 du carter 12 et par un piston 58.

Le piston 58 est mobile axialement de manière à pouvoir venir serrer axialement, sous l'action de la pression de l'huile dans la chambre 56, l'embrayage de verrouillage 20, qui est dans l'exemple de réalisation représenté sur la figure 1 un embrayage de type multi- disques.

Un tel embrayage comporte une pluralité de flasques 60 et des disques de friction 62, interposés axialement entre deux flasques 60 successifs, chaque disque de friction 62 étant avantageusement pourvu sur ses faces avant et arrière de garnitures de friction.

Les flasques 60 comportent, à leur périphérie radiale extérieure, une denture 64 ou tout autre moyen propre à lier en rotation par coopération de formes les flasques 60 à une première pièce de liaison 66.

La première pièce de liaison 66 sera décrite plus en détail ultérieurement en relation avec les enseignements de l'invention.

Les disques 62 comportent, de manière analogue aux flasques 60, des moyens d'engrènement 68 qui, agencés à leur périphérie radiale intérieure, assurent la liaison en rotation avec une deuxième pièce de liaison 70.

La deuxième pièce de liaison 70 est solidaire en rotation de l'entrée du dispositif d'amortissement 30, ici par l'intermédiaire de la rondelle de guidage avant 32.

La deuxième pièce de liaison 70 présente globalement une forme en « L » comportant respectivement une branche axiale dont la face supérieure coopère par engrènement avec des dents 68 des disques de friction 62 et une branche radiale qui, s'étendant à partir de l'extrémité axiale arrière de la branche axiale, est fixée sur la face avant de la rondelle de guidage avant 32 par l'intermédiaire de rivets extrudés 72.

En variante, la deuxième pièce de liaison 70 peut être fixée sur la rondelle de guidage avant 32 par d'autres moyens, notamment par soudage.

Le piston 58 comporte, à sa périphérie radiale extérieure, une gorge annulaire 74 dans laquelle sont montés des premiers moyens 76 d'étanchéité dynamique, tels qu'un segment, qui coopère avec une surface annulaire 78 en vis-à-vis de la coquille avant 16.

Le piston 58 comporte, à sa périphérie radiale intérieure, une surface annulaire 80 propre à coopérer avec des seconds moyens 82 d'étanchéité dynamique, tels qu'un segment, qui est monté dans une gorge annulaire 84 d'un moyeu 86, ou centreur, qu'entoure le piston 58, avec lequel il est lié en rotation par exemple par engrènement.

Les moyens d'étanchéité 76, 82 délimitent ainsi la chambre avant 56, qui est alimentée en huile par un arbre creux, ici l'arbre mené A2, des passages radiaux adaptés étant prévus dans le moyeu ou centreur 86.

Comme expliqué en préambule, la première pièce de liaison 66 est une pièce distincte de la coquille avant 16 qui, dans les solutions de l'état de la technique, est rapportée à fixation sur la coquille avant 16 du carter 12. La fixation de la pièce de liaison 66 est généralement réalisée par soudage ce qui présente différents inconvénients, notamment de fabrication et de fiabilité en fonctionnement.

C'est notamment pour résoudre ces inconvénients que l'invention propose une nouvelle solution qui, tout en étant simple et économique, garantit une bonne tenue mécanique de la première pièce de liaison 66 qui est destinée à lier sélectivement en rotation la deuxième coquille avant 16 du carter 12 aux disques de friction 62 de l'embrayage de verrouillage 20 par l'intermédiaire des flasques 60 actionnés par le piston 58 commandé hydrauliquement.

Conformément à l'invention, la deuxième coquille avant 16 du carter 12 comporte au moins deux parties distinctes constituées respectivement par une première partie de coquille 16B, dite inférieure, et une deuxième partie de coquille 16A, dite supérieure, qui relie la première partie inférieure de coquille 16B à la première coquille arrière 14 du carter 12 et la première pièce de liaison 66 est venue de matière avec l'une 16A ou 16B des deux parties de coquille formant la deuxième coquille avant 16 du carter 12.

Avantageusement, la première pièce de liaison 66 est venue de matière, c'est-à-dire réalisée en une seule pièce ou monobloc avec l'une des deux parties de coquille 16A ou 16B, la première pièce de liaison 66 n'est plus une pièce distincte et rapportée à fixation par soudage sur la face radiale interne de la coquille avant 16 du carter 12.

Dans l'exemple de réalisation représenté aux figures 1 à 4, la première pièce de liaison 66 est venue de matière avec la partie inférieure 16B de la coquille avant 16 du carter 12.

En variante non représentée, la première pièce de liaison 66 est venue de matière avec la partie supérieure 16A de la coquille avant 16 du carter 12.

On décrira maintenant plus particulièrement l'exemple de réalisation préféré représenté aux figures 1 à 4 dans lequel la première pièce de liaison 66 est réalisée en une pièce avec la partie inférieure 16B de la coquille avant 16 du carter 12.

De préférence, la première pièce de liaison 66 est formée par pliage d'une extrémité supérieure 88 de la partie inférieure 16B de la coquille avant 16 du carter 12, ladite extrémité étant repliée axialement vers l'arrière en direction de la coquille arrière 14 du carter 12 pour former la première pièce de liaison 66 qui s'étend axialement, globalement parallèlement à l'axe principal X-X.

La première pièce de liaison 66 est par exemple obtenue à la faveur d'une opération d'emboutissage de la partie inférieure 16B de la coquille avant 16 pour en replier l'extrémité 88, avant de procéder ultérieurement à la liaison de la partie inférieure 16B avec l'autre partie supérieure 16A de la coquille avant 16 du carter 12.

La première pièce de liaison 66 présente une forme de couronne annulaire qui s'étend axialement vers l'arrière, de préférence orthogonalement par rapport à au moins une portion d'orientation radiale de l'extrémité 88 de la partie inférieure 16B de coquille.

Avantageusement, la partie inférieure 16B de la coquille avant 16 du carter 12 dont la première pièce de liaison 66 est venue de matière, comporte un tronçon coudé 90 qui relie la portion radiale de la partie inférieure de coquille 16B à ladite première pièce de liaison 66 s'étendant axialement vers l'arrière.

La partie supérieure de coquille 16A de la coquille avant 16 du carter 12 comporte une extrémité supérieure 92, d'orientation axiale, qui est solidaire en rotation de la coquille arrière 14 du carter 12, généralement par soudage de l'extrémité axiale supérieure 92 avec une extrémité axiale supérieure 94 de la coquille arrière 14.

La partie supérieure de coquille 16A de la coquille avant 16 du carter 12 comporte une extrémité inférieure 96 qui, lorsque la première pièce de liaison 66 est réalisée en une seule pièce avec la partie inférieure de coquille 16B, est d'orientation radiale et solidaire du tronçon coudé 90 de la partie inférieure 16B de la coquille avant 16 du carter 12.

Avantageusement, l'extrémité radiale 96 de la partie supérieure de coquille 16A est soudée à l'autre extrémité 88 de la partie inférieure de coquille 16B de la coquille avant 16 du carter 12 comportant la première pièce de liaison 66, de préférence au voisinage de la portion coudée 90.

De préférence, la liaison par soudage entre la partie supérieure 16A et la partie inférieure 16B formant la coquille avant 16 du carter 12 est réalisée par soudage à l'arc, notamment par soudage de type MIG (« *Metal Inert Gas* ») ou TIG (« *Tungsten Inert Gas* »).

Par comparaison avec l'état de la technique dans lequel la liaison par soudage entre la première pièce de liaison 66 et la coquille avant 16 du carter 12 était délicate et complexe, la liaison par soudage entre la partie supérieure 16A et la partie inférieure 16B formant la coquille avant 16 du carter 12 est susceptible d'être réalisée avec des procédés de soudage moins coûteux et plus aisé à mettre en oeuvre industriellement.

Avantageusement, la soudure entre la partie supérieure 16A et la partie inférieure 16B formant la coquille avant 16 du carter 12 est effectuée à l'extérieur du carter 12 de sorte que la zone de jonction entre deux parties 16A et 16B est plus accessible.

Avantageusement, le cordon de soudure assurant la jonction entre la partie supérieure 16A et la partie inférieure 16B de la coquille avant 16 est susceptible d'être aisément contrôlé, à tout le moins par un contrôle visuel, ce qui permet de garantir tant la tenue mécanique de la coquille avant 16 que l'étanchéité générale du carter 12.

La première pièce axiale de liaison 66 comporte une face annulaire interne munie circonférentiellement d'une denture 98 qui s'étend radialement et qui est apte à coopérer par engrènement avec la denture complémentaire 64 que comporte à leur périphérie radiale externe les flasques 60 de l'embrayage de verrouillage 20.

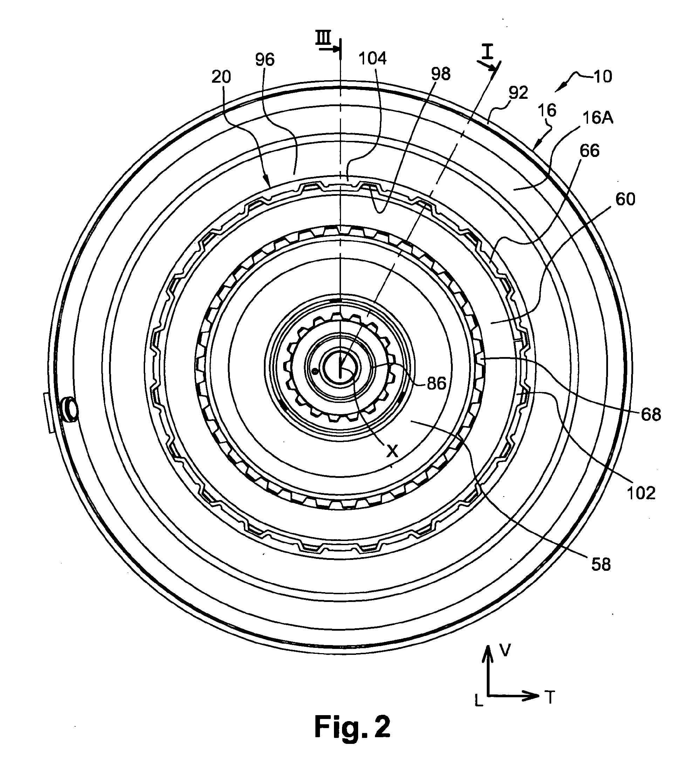

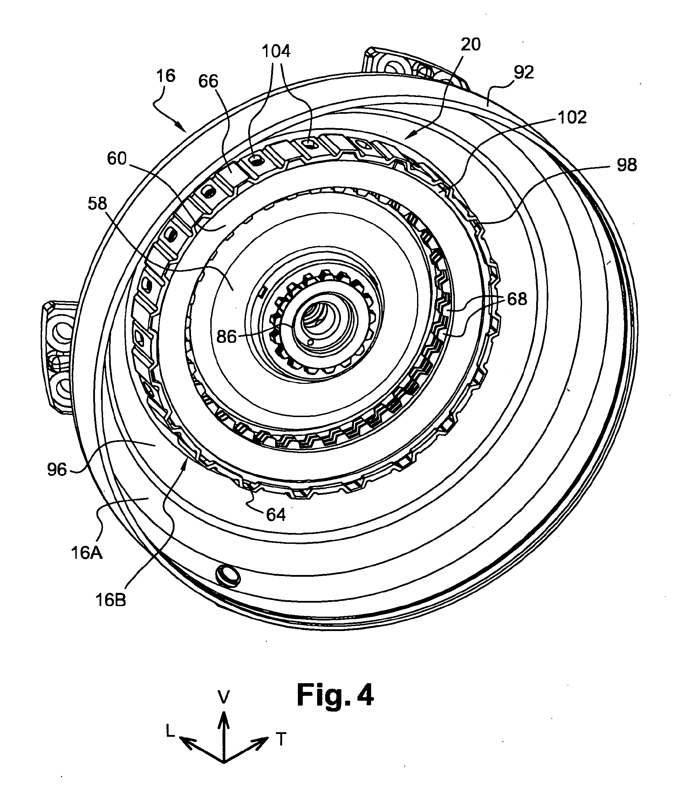

De préférence, la denture 98 est formée par la première pièce de liaison 66 qui, en forme de couronne annulaire, présente un profil crénelé comme on peut mieux le voir sur les figures 2 et 4.

De manière analogue, la deuxième pièce axiale de liaison 70 comporte une face annulaire externe munie circonférentiellement d'une denture 100 qui s'étend radialement et qui est apte à coopérer par engrènement avec la denture complémentaire 68 que comporte à leur périphérie radiale interne les disques de friction 62 de l'embrayage de verrouillage 20.

La denture complémentaire 68 des disques de friction 62 de l'embrayage de verrouillage 20 est notamment visible aux figures 2 et 4 du fait de l'absence de la deuxième pièce de liaison 70.

Comme indiqué précédemment, l'appareil 10 est ici du type « trois voies », c'est à dire qu'il comprend une première voie V1 d'alimentation du circuit hydraulique du convertisseur 18 et une seconde voie V2 de sortie, et une troisième voie d'alimentation V3 de la chambre avant 56 pour déplacer axialement le piston 58, cette troisième voie V3 étant indépendante des première V1 et seconde V2 voies du convertisseur 18.

On rappellera ci-après le fonctionnement d'un tel appareil d'accouplement hydrocinétique 10, lequel ne constitue qu'un exemple de réalisation non limitatif d'application des enseignements de l'invention.

Dans une première phase de fonctionnement, dite phase convertisseur, le couple de l'arbre menant A1 est transmis à la roue d'impulseur 22 qui entraîne, par circulation d'huile entre les aubes 22a et 24a, la roue de turbine 24.

Durant la phase convertisseur, le dispositif d'amortissement 30 n'intervient pratiquement pas dans l'amortissement des vibrations ou oscillations de torsion issues notamment des acyclismes du moteur.

En effet, les vibrations ou oscillations de torsion sont filtrées principalement par l'huile dans le convertisseur 18, puisque la transmission du couple moteur est réalisée par l'intermédiaire de l'énergie cinétique de l'huile dans le convertisseur 18, l'amortisseur 30 se transmettant le couple de la roue de turbine 24 au moyeu de sortie 48.

Dans une seconde phase, dite phase de couplage, on alimente la chambre étanche avant 56 de manière que le piston 58 exerce, sous l'action de la pression de l'huile dans la chambre 56, une pression axiale orientée vers l'arrière en direction de l'embrayage de verrouillage 20 de manière à serrer axialement les disques de friction 62 et les flasques 60 pour les lier en rotation et ainsi coupler les arbres menant A1 et mené A2.

Avantageusement, la pièce de l'embrayage de verrouillage 20 qui adjacente au piston 58 est un flasque 60, dit flasque avant, ainsi la pièce sur laquelle le piston 58 agit pour réaliser le pontage de l'ensemble multi-disques est une pièce liée, comme le piston 58, à l'arbre menant A1 par l'intermédiaire de la première pièce de liaison 66, le piston 58 et le(s) flasque(s) 60 étant dès lors entraîné(s) en rotation à la même vitesse.

L'embrayage de verrouillage 20 comporte ici trois disques de friction 62 respectivement intercalés axialement entre quatre flasques 60, dont le dernier, dit flasque arrière, est immobilisé axialement par un anneau de butée 102 porté par la première pièce de liaison 66.

Le flasque arrière 60, opposé axialement au flasque avant 60 adjacent au piston 58, présente de préférence une épaisseur selon la direction axiale qui est supérieure à celle des trois autres flasques 60.

L'embrayage de verrouillage 20 est généralement activé après le démarrage du véhicule et après le couplage hydraulique des arbres menant A1 et mené A2, pour éviter la perte de rendement induite notamment par des phénomènes de glissement entre les roues de turbine 24 et d'impulseur 22.

A l'état embrayé, c'est à dire lorsque le piston 58 vient serrer les disques de friction 62 par l'intermédiaire de l'embrayage multi-disques 20, le couple de l'arbre menant A1 est transmis d'abord aux rondelles de guidage 28, 32, puis au voile 34, par l'intermédiaire des organes élastiques 42.

Les organes élastiques 42 amortissent les oscillations de torsion puis, après débattement angulaire de la liaison à jeu entre les rondelles de guidage 28, 32 et le voile 34 du dispositif d'amortissement 30, le couple est transmis au voile 34, qui est lié à rotation à l'arbre mené A2, par l'intermédiaire du moyeu de sortie 48.

On décrira maintenant plus particulièrement la circulation du fluide, ici de l'huile, dans le carter 12 en relation avec le problème du refroidissement de l'embrayage de verrouillage 20.

Sur les figures 1 et 3, on a représenté schématiquement par des flèches la circulation de l'huile à l'intérieur du carter 12 de l'appareil 10.

La voie d'alimentation V1 amène l'huile dans le convertisseur 18, entre la roue d'impulseur 22 et la roue de turbine 24, puis l'huile est évacuée du convertisseur 18 par l'extérieur, en passant dans l'espace radial entre la roue de turbine 24 et la deuxième coquille avant 16 du carter 12.

L'huile circule ensuite radialement vers l'intérieur, dans l'espace axial E compris entre la roue de turbine 24 et la deuxième coquille avant 16, pour être évacué par la voie d'évacuation V2, qui est par exemple agencée entre l'arbre mené et un manchon de réaction portant la roue de réaction 26.

Lorsque l'embrayage 20 est verrouillé et lorsqu'il est dans une phase de glissement, c'est à dire lorsque le piston 58 est commandé dans le sens de son engagement contre les disques de friction 62, il est nécessaire, pour le refroidissement de l'embrayage de verrouillage 20, que la plus grande quantité possible d'huile traverse l'embrayage 20.

En effet, la circulation de l'huile à travers l'embrayage de verrouillage 20 permet de le refroidir, en particulier lorsque l'embrayage 20 est engagé, ou semi-engagé, et qu'il se produit un glissement entre les surfaces de friction des flasques 60 et des disques de friction 62, produisant un échauffement important.

Avantageusement, au moins la première pièce de liaison 66 comporte des perçages radiaux 104 qui sont aptes à permettre à l'huile contenue dans le carter 12 de circuler radialement de haut en bas à travers l'embrayage de verrouillage 20, c'est-à-dire à travers la première pièce de liaison 66 et en direction de la deuxième pièce de liaison 70, de manière à refroidir efficacement les disques de friction 62 de l'embrayage, plus généralement les surfaces de friction portées respectivement par les disques de friction 62 et les flasques 60.

De préférence, l'extrémité de la partie inférieure 16B de la coquille avant 16 repliée axialement vers l'arrière pour former la première pièce de liaison 66 est susceptible d'être traitée localement par tout traitement approprié en vue d'en renforcer notamment les propriétés mécaniques.

Grâce à l'invention, la tenue mécanique de la première pièce de liaison 66 venue de matière avec la partie inférieure de coquille 16B est améliorée et il est dès lors possible de réaliser des perçages radiaux 104 aptes à permettre le passage d'un débit important d'huile favorisant l'augmentation du refroidissement, sans pour autant fragiliser la première pièce de liaison 66.

De préférence, la deuxième pièce de liaison 70 comporte des moyens analogues, tels que des perçages radiaux 106, c'est-à-dire des moyens aptes à permettre, la circulation radiale de l'huile à travers la deuxième pièce de liaison 70.

Avantageusement, l'huile traverse dès lors de part en part l'embrayage de verrouillage 20 avec un refroidissement optimal des surfaces de friction portées par les disques de friction 62 et les flasques 60.

Avantageusement, les perçages radiaux 104 de refroidissement sont agencés axialement dans la première pièce de liaison 66 et/ou les perçages radiaux 106 de la deuxième pièce de liaison 70 de manière à être radialement globalement à l'aplomb, soit au dessus et/ou en dessous, des disques de friction 62 et des flasques 60 de l'embrayage de verrouillage 20.

De préférence, les perçages radiaux 104, 106 sont répartis circonférentiellement de manière régulière sur la première pièce de liaison 66 et/ou de la deuxième pièce de liaison 70.

Avantageusement, on limite la quantité d'huile passant dans l'espace axial entre l'embrayage 20 et la roue de turbine 24, dès lors que la quantité d'huile traversant le dispositif d'amortissement 30, en ne traversant pas ou peu l'embrayage 20, ne participe pas au refroidissement de l'embrayage de verrouillage 20.

Ce phénomène est par ailleurs d'autant plus présent que, pendant le fonctionnement de l'appareil d'accouplement 10, sous la pression du fluide, le carter 12 se déforme en gonflant, ce qui augmente la taille de l'espace axial E entre l'embrayage 20 et la roue de turbine 24.

Avantageusement, la rondelle élastique 54 du dispositif d'amortissement 30, qui est interposée entre le voile 34 et la rondelle de guidage arrière 28, est agencée radialement à l'intérieur par rapport aux organes élastiques 42.

La rondelle élastique 54 forme une barrière sensiblement étanche qui limite ou empêche la circulation de l'huile radialement vers l'intérieur et cela même en cas de déplacement axial entre le voile 34 et la rondelle de guidage arrière 28.

Avantageusement, la rondelle élastique 54 favorise donc la circulation de l'huile vers l'espace axial E situé à l'avant et par conséquent la circulation à travers l'embrayage de verrouillage 20 de sorte qu'elle participe à l'amélioration du refroidissement.

En effet, le flux d'huile provenant de la voie d'alimentation V1, qui circule entre la coquille avant 16 et le dispositif d'amortissement 30, pénètre dans l'espace axial avant E en passant en partie par les fenêtres 44 et 46. Ce flux d'huile se retrouve bloqué d'une part par la rondelle élastique 54 et, d'autre part, par la rondelle de guidage avant 32 solidaire de la deuxième pièce de liaison 70, ce qui l'empêche de se diriger directement vers la voie d'évacuation V2.

Par conséquent, la majorité du flux d'huile va emprunter un chemin plus facile passant par l'embrayage de verrouillage 20 qui va pouvoir être efficacement refroidi par la circulation de l'huile.

Avantageusement, le voile 34 comporte dans une partie radiale inférieure, située verticalement de dessous par rapport à la rondelle élastique 54, des perçages axiaux qui, de préférence répartis angulairement de manière régulière, sont aptes à favoriser le retour de l'huile ayant traversé l'embrayage de verrouillage 20 vers la voie d'évacuation V2.

Selon une variante de réalisation non représentée, le bord périphérique supérieur de la rondelle de guidage arrière 28 d'orientation radiale se prolonge, après une portion coudée, axialement vers l'arrière par un déflecteur en forme de jupe axiale.

Avantageusement, le déflecteur est formé par une partie de la rondelle de guidage arrière 28 qui est agencée radialement au-delà de la portion radiale par l'intermédiaire de laquelle la rondelle de guidage arrière 28 est fixée solidairement en rotation à la rondelle de guidage avant 32 par l'intermédiaire des rivets 36.

Avantageusement, un tel déflecteur permet de dévier le flux d'huile axialement vers l'embrayage de verrouillage 20.

De préférence, le déflecteur est agencé de manière à minimiser l'espace axial entre la périphérie externe du dispositif d'amortissement 30 et la roue de turbine 24 de manière que le flux s'écoule vers la partie de l'espace axial avant E qui, située entre la coquille avant 16 et le dispositif d'amortissement 30, comporte l'embrayage de verrouillage 20 à refroidir.

Selon une autre variante de réalisation non représentée, le déflecteur est formée par le bord périphérique supérieur de la rondelle de guidage avant 32 d'orientation radiale qui se prolonge, après une portion coudée, axialement vers l'avant pour former une jupe d'orientation globalement axiale et parallèle à la portion de la coquille avant 16 en vis-à-vis.

Bien entendu, l'invention n'est nullement limitée à l'exemple de réalisation représenté qui vient d'être décrit.

Selon une variante non représentée de l'invention, la coquille avant 16 du carter 12 comporte au moins deux parties distinctes constituées respectivement par la partie inférieure de coquille 16B et par la partie supérieure de coquille 16A qui relie la partie inférieure de coquille 16B à la coquille arrière 14 du carter 12 et la première pièce de liaison 66, destinée à lier sélectivement en rotation la coquille avant 16 du carter 12 audit au moins un disque de friction 62 de l'embrayage de verrouillage 20, est venue de matière avec la partie supérieure de coquille 16A de la coquille avant 16 du carter 12.

La première pièce de liaison 66 est alors formée par pliage d'une extrémité inférieure de la partie supérieure de coquille 16A de la coquille avant 16 du carter 12, par exemple par emboutissage, ladite extrémité étant repliée axialement vers l'arrière en direction de la coquille arrière 14 du carter 12 pour former la première pièce de liaison 66 qui présente globalement une forme de couronne annulaire s'étendant axialement vers l'arrière, orthogonalement par rapport à au moins une portion d'orientation radiale de la coquille avant 16 du carter 12.

La partie supérieure 16A de la coquille avant 16 du carter 12 avec laquelle la première pièce de liaison 66 est réalisée une seule pièce, comporte un tronçon coudé qui relie la portion radiale de la partie supérieure de coquille à ladite première pièce de liaison 66 s'étendant axialement vers l'arrière.

Selon cette variante, lorsque la première pièce de liaison 66 est réalisée en une seule pièce avec la partie supérieure de coquille 16A, la partie supérieure 16A de la coquille avant 16 comporte un tronçon coudé à 90° dont est solidaire l'extrémité supérieure d'orientation radiale de la partie inférieure de coquille 16B de la coquille avant 16.

De préférence, cette extrémité radiale de la partie inférieure 16B de la coquille avant 16 du carter 12 est soudée, notamment par soudage à l'arc de type MIG ou TIG, à l'autre partie supérieure 16A de la coquille avant 16 comportant la première pièce de liaison 66.

Avantageusement, l'invention permet d'une part d'obtenir une bonne fiabilité mécanique de la première pièce de liaison 66 et une fabrication simple et peu coûteuse de la coquille avant 16 du carter intégrant ladite première pièce de liaison 66 et, d'autre part, d'optimiser le refroidissement de l'embrayage de verrouillage, en particulier grâce aux perçages axiaux 104 et 106.

## Revendications

1. Appareil d'accouplement hydrocinétique (10), notamment pour un véhicule automobile, du type comportant au moins :
- un carter (12) formé d'une première coquille (14), dite arrière, qui lie en rotation un arbre menant (A1) et une roue d'impulseur (22) ;
- une roue de turbine (24) qui est solidaire en rotation, par une liaison sans jeu, d'une pièce (28) apte à être liée en rotation à un arbre mené (A2) ;
- un embrayage de verrouillage (20) du couplage des arbres menant (A1) et mené (A2) comportant un piston (58), mobile axialement pour lier, de manière débrayable, une deuxième coquille (16), dite avant, du carter (12) à l'arbre mené (A2), en serrant au moins un disque de friction (62), ledit au moins un disque de friction (62) étant solidaire en rotation, d'une part, de la coquille avant (16) du carter (12) par l'intermédiaire d'une première pièce de liaison (66) et, d'autre part, de l'élément d'entrée (28, 32) d'un dispositif d'amortissement (30) par l'intermédiaire d'une deuxième pièce de liaison (70),
dans lequel la coquille avant (16) du carter (12) comporte au moins deux parties distinctes constituées respectivement par une première partie de coquille (16B), dite inférieure, et une deuxième partie de coquille (16A), dite supérieure, qui relie la première partie inférieure de coquille (16B) à la coquille arrière (14) du carter (12) et dans lequel la première pièce de liaison (66), destinée à lier sélectivement en rotation la coquille avant (16) du carter (12) audit au moins un disque de friction (62) de l'embrayage de verrouillage (20), est venue de matière avec l'une (16A) ou (16B) des deux parties de coquille (16A, 16B) formant la coquille avant (16) du carter (12),
**caractérisé en ce que** la première pièce de liaison (66) est formée par pliage d'une extrémité supérieure (88) de la partie inférieure (16B) de la coquille avant (16) du carter (12) ou d'une extrémité inférieure (96) de la partie supérieure (16A) de la coquille avant (16) du carter (12), ladite extrémité (88, 96) étant repliée axialement vers l'arrière en direction de la coquille arrière (14) du carter (12) pour former la première pièce de liaison (66).

2. Appareil (10) selon la revendication 1, **caractérisé en ce que** la première pièce de liaison (66) est venue de matière avec la première partie inférieure (16B) de la coquille avant (16) du carter (12).

3. Appareil (10) selon la revendication 1, **caractérisé en ce que** la première pièce de liaison (66) est venue de matière avec la deuxième partie supérieure (16A) de la coquille avant (16) du carter (12).

4. Appareil (10) selon l'une des revendications 1 à 3, **caractérisé en ce que** la première pièce de liaison (66) forme une couronne annulaire qui s'étend axialement vers l'arrière et globalement orthogonalement par rapport à au moins une portion d'orientation radiale de la coquille avant (16) du carter (12), ladite portion radiale appartenant à la première partie inférieure de coquille (16B) et/ou à la deuxième partie supérieure de coquille (16A).

5. Appareil (10) selon la revendication 4, **caractérisé en ce que** la partie inférieure (16B) ou supérieure (16A) de la coquille avant (16) du carter (12) dont la première pièce de liaison (66) est venue de matière, comporte un tronçon coudé (90) qui relie la portion radiale de la partie inférieure (16B) ou supérieure (16A) de coquille à ladite extrémité supérieure (88) ou inférieure (96) s'étendant axialement vers l'arrière pour former la première pièce de liaison (66).

6. Appareil (10) selon la revendication 5, **caractérisé en ce que** l'extrémité radiale (96, 88) de la partie supérieure (16A) ou inférieure (16B) de la coquille avant (16) du carter (12) est soudée à l'autre partie inférieure (16B) ou supérieure (16A) de la coquille avant (16) du carter (12) comportant la première pièce de liaison (66).

7. Appareil (10) selon la revendication 5, **caractérisé en ce que** la première pièce de liaison (66) comporte une face annulaire interne munie circonférentiellement d'une denture (98) qui s'étend radialement et qui est apte à coopérer par engrènement avec une denture (64) complémentaire que comporte des flasques (60) de l'embrayage de verrouillage (20).

8. Appareil (10) selon l'une quelconque des revendications précédentes, **caractérisé en ce que** au moins la première pièce de liaison (66) comporte des perçages radiaux (104) qui sont aptes à permettre à l'huile contenue dans le carter (12) de circuler radialement de haut en bas à travers l'embrayage de verrouillage (20), à travers la première pièce de liaison (66) et en direction de la deuxième pièce de liaison (70), de manière à refroidir des surfaces de friction dudit au moins un disque de friction (62) et des flasques (60) de l'embrayage de verrouillage (20).

9. Appareil (10) selon la revendication 8, **caractérisé en ce que** la deuxième pièce de liaison (70) comporte des perçages radiaux (106) qui sont aptes à permettre, à travers la deuxième pièce de liaison (70), la circulation radiale de l'huile traversant l'embrayage de verrouillage (20) pour le refroidir.

10. Appareil (10) selon l'une des revendications 8 ou 9, **caractérisé en ce que** les perçages radiaux (104, 106) de refroidissement sont agencés axialement dans la première pièce de liaison (66) et/ou la deuxième pièce de liaison (70) de manière à être radialement globalement à l'aplomb des surfaces de friction dudit au moins un disque de friction (62) et des flasques (60) de l'embrayage de verrouillage (20) et **en ce que** les perçages (104, 106) sont répartis circonférentiellement de manière régulière sur la première pièce de liaison (66) et/ou la deuxième pièce de liaison (70).

## Claims

1. Hydrokinetic coupling device (10), in particular for a motor vehicle, of the type comprising at least:
- a housing (12) which is formed by a first shell (14), known as the rear shell, which connects in rotation a drive shaft (A1) and an impeller wheel (22);
- a turbine wheel (24), which is integral in rotation, by means of a connection without play, with a part (28) which can be connected in rotation to a driven shaft (A2);
- a clutch (20) for locking of the coupling of the drive shaft (A1) and the driven shaft (A2), comprising a piston (58) which is mobile axially, in order to connect in a disengageable manner a second shell (16), known as the front shell, of the housing (12), to the driven shaft (A2), by clamping at least one friction disc (62), the said at least one friction disc (62) being integral in rotation, firstly with the front shell (16) of the housing (12), by means of a first connection part (66), and secondly with the intake element (28, 32) of a damping device (30), by means of a second connection part (70),
wherein the front shell (16) of the housing (12) comprises at least two distinct parts which are constituted respectively by a first shell part (16B), known as the lower part, and a second shell part (16A), known as the upper part, which connects the first, lower part of the shell (16B) to the rear shell (14) of the housing, (12), and wherein the first connection part (66), which is designed to connect the front shell (16) of the housing (12) selectively in rotation to the said at least one friction disc (62) of the locking clutch (20), is integral with one (16A) or (16B) of the two shell parts (16A, 16B) which form the front shell (16) of the housing (12),
**characterised in that** the first connection part (66) is formed by bending an upper end (88) of the lower part (16B) of the front shell (16) of the housing (12) or a lower end (96) of the upper part (16A) of the front shell (16) of the housing (12), the said end (88, 96) being folded back axially rearwards in the direction of the rear shell (14) of the housing (12), in order to form the first connection part (66).

2. Device (10) according to claim 1, **characterised in that** the first connection part (66) is integral with the first, lower part (16B) of the front shell (16) of the housing (12).

3. Device (10) according to claim 1, **characterised in that** the first connection part (66) is integral with the second, upper part (16A) of the front shell (16) of the housing (12).

4. Device (10) according to one of claims 1 to 3, **characterised in that** the first connection part (66) forms an annular ring which extends axially rearwards and generally at right-angles to at least a radially oriented portion of the front shell (16) of the housing (12), the said radial portion belonging to the first, lower part of the shell (16B), and/or to the second, upper part of the shell (16A).

5. Device (10) according to claim 4, **characterised in that** the lower (16B) or upper (16A) part of the front shell (16) of the housing (12), with which the first connection part (66) is integral, comprises an elbowed section (90) which connects the radial portion of the lower (16B) or upper (16A) part of the shell to the said upper (88) or lower (96) end which extends axially rearwards in order to form the first connection part (66).

6. Device (10) according to claim 5, **characterised in that** the radial end (96, 88) of the upper (16A) or lower (16B) part of the front shell (16) of the housing (12) is welded to the other, lower (16B) or upper (16A) part of the front shell (16) of the housing (12), comprising the first connection part (66).

7. Device (10) according to claim 5, **characterised in that** the first connection part (66) comprises an inner annular surface which is provided circumferentially with toothing (98) which extends radially, and can co-operate by engagement with complementary toothing (64), comprised on the flanges (60) of the locking clutch (20).

8. Device (10) according to any one of the preceding claims, **characterised in that** at least the first connection part (66) comprises radial apertures (104) which can allow the oil which is contained in the housing (12) to circulate radially from top to bottom through the locking clutch (20), through the first connection part (66), and in the direction of the second connection part (70), such as to cool friction surfaces of the said at least one friction disc (62) and of the flanges (60) of the locking clutch (20).

9. Device (10) according to claim 8, **characterised in that** the second connection part (70) comprises radial apertures (106) which can permit, through the second connection part (70), the radial circulation of the oil which passes through the locking clutch (20) in order to cool the latter.

10. Device (10) according to one of claims 8 or 9, **characterised in that** the radial cooling apertures (104, 106) are arranged axially in the first connection part (66) and/or the second connection part (70), such as to be radially generally plumb with the friction surfaces of the said at least one friction disc (62) and of the flanges (60) of the locking clutch (20), and **in that** the apertures (104, 106) are distributed circumferentially regularly on the first connection part (66) and/or the second connection part (70).

## Patentansprüche

1. Hydrokinetisches Kupplungsvorrichtung (10), insbesondere für ein Kraftfahrzeug, umfassend zumindest:
- ein aus einer ersten, sogenannten hinteren Schale (14) gebildetes Gehäuse (12), die eine Antriebswelle (A1) drehfest mit einem Pumpenrad (22) verbindet;
- ein Turbinenrad (24), das mittels einer spielfreien Verbindung drehfest mit einem Teil (28) verbunden ist, welches geeignet ist, drehfest mit einer Abtriebswelle (A2) verbunden zu werden;
- eine Überbrückungskupplung (20) zum Kuppeln der Antriebswelle (A1) mit der Abtriebswelle (A2), umfassend einen axial beweglichen Kolben (58), um in auskuppelbarer Weise eine zweite, sogenannte vordere Schale (16) des Gehäuses (12) mit der Abtriebswelle (A2) durch Einspannen mindestens einer Reibungsscheibe (62) zu verbinden, wobei die mindestens eine Reibungsscheibe (62) einerseits unter Vermittlung eines ersten Verbindungsteils (66) mit der vorderen Schale (16) des Gehäuses (12) und andererseits unter Vermittlung eines zweiten Verbindungsteils (70) mit dem Eingangselement (28, 32) einer Dämpfungsvorrichtung (30) drehfest verbunden ist,
wobei die vordere Schale (16) des Gehäuses (12) zumindest zwei verschiedene Teile umfasst, die jeweils gebildet sind aus einem ersten, sogenannten unteren Teil (16B) der Schale und einem zweiten, sogenannten oberen Teil (16A) der Schale, welcher den ersten, unteren Teil (16B) der Schale mit der hinteren Schale (14) des Gehäuses (12) verbindet, und wobei das zur selektiven Drehverbindung der vorderen Schale (16) des Gehäuses (12) mit der mindestens einen Reibungsscheibe (62) der Überbrückungskupplung (20) bestimmte erste Verbindungsteil (66) einstückig mit einem (16A) oder (16B) der beiden die vordere Schale (16) des Gehäuses (12) bildenden Teile der Schale (16A, 16B) ausgeführt ist,
**dadurch gekennzeichnet, dass** das erste Verbindungsteil (66) durch Abwinkeln eines oberen Endstücks (88) des unteren Teils (16B) der vorderen Schale (16) des Gehäuses (12) oder durch Abwinkeln eines unteren Endstücks (96) des oberen Teils (16A) der vorderen Schale (16) des Gehäuses (12) gebildet ist, wobei das Endstück (88, 96) axial nach hinten in Richtung der hinteren Schale (14) des Gehäuses (12) gefaltet ist, um das erste Verbindungsteil (66) zu bilden.

2. Vorrichtung (10) nach Anspruch 1, **dadurch gekennzeichnet, dass** das erste Verbindungsteil (66) einstückig mit dem ersten, unteren Teil (16B) der vorderen Schale (16) des Gehäuses (12) ausgeführt ist.

3. Vorrichtung (10) nach Anspruch 1, **dadurch gekennzeichnet, dass** das erste Verbindungsteil (66) einstückig mit dem zweiten, oberen Teil (16A) der vorderen Schale (16) des Gehäuses (12) ausgeführt ist.

4. Vorrichtung (10) nach einem der Ansprüche 1 bis 3, **dadurch gekennzeichnet, dass** das erste Verbindungsteil (66) einen ringförmigen Kranz bildet, der sich axial nach hinten und im wesentlichen orthogonal zu zumindest einem radial ausgerichteten Abschnitt der vorderen Schale (16) des Gehäuses (12) erstreckt, wobei der radiale Abschnitt zu dem ersten, unteren Teil (16B) der Schale und/oder zu dem zweiten, oberen Teil (16A) der Schale gehört.

5. Vorrichtung (10) nach Anspruch 4, **dadurch gekennzeichnet, dass** der untere (16B) oder obere (16A) Teil der vorderen Schale (16), mit dem das erste Verbindungsteil (66) einstückig ausgeführt ist, ein abgewinkeltes Teilstück (90) aufweist, das den radialen Abschnitt des unteren (16B) oder oberen (16A) Teils der Schale mit dem oberen Endstück (88) oder unteren Endstück (96), welches sich axial nach hinten erstreckt, um das erste Verbindungsteil (66) zu bilden, verbindet.

6. Vorrichtung (10) nach Anspruch 5, **dadurch gekennzeichnet, dass** das radiale Endstück (96, 88) des oberen (16A) oder unteren (16B) Teils der vorderen Schale (16) des Gehäuses (12) an den anderen unteren (16B) oder oberen (16A) Teil der vorderen Schale (16) des Gehäuses (12), welcher das erste Verbindungsteil (66) aufweist, angeschweißt ist.

7. Vorrichtung (10) nach Anspruch 5, **dadurch gekennzeichnet, dass** das erste Verbindungsteil (66) eine ringförmige Innenfläche aufweist, die in Umfangsrichtung mit einer Zahnung (98) versehen ist, die sich radial erstreckt und geeignet ist, durch Eingriff mit einer komplementären Zahnung (64) an Zwischenflanschen (60) der Überbrückungskupplung (20) zusammenzuwirken.

8. Vorrichtung (10) nach einem der vorherigen Ansprüche, **dadurch gekennzeichnet, dass** zumindest das erste Verbindungsteil (66) radiale Bohrungen (104) aufweist, die geeignet sind, in dem Gehäuse (12) befindlichem Öl zu erlauben, radial von oben bis unten durch die Überbrückungskupplung (20), durch das erste Verbindungsteil (66) und in Richtung zu dem zweiten Verbindungsteil (70) zu zirkulieren, um die Reibungsflächen der mindestens einen Reibungsscheibe (62) und der Zwischenflansche (60) der Überbrückungskupplung (20) abzukühlen.

9. Vorrichtung (10) nach Anspruch 8, **dadurch gekennzeichnet, dass** das zweite Verbindungsteil (70) radiale Bohrungen (106) aufweist, die geeignet sind, dem durch die Überbrückungskupplung (20) strömenden Öl die radiale Zirkulation durch das zweite Verbindungsteil (70) zu erlauben, um sie abzukühlen.

10. Vorrichtung (10) nach Anspruch 8 oder 9, **dadurch gekennzeichnet, dass** die radialen Kühlbohrungen (104, 106) axial derart in dem ersten Verbindungsteil (66) und/oder dem zweiten Verbindungsteil (70) angeordnet sind, dass sie radial im wesentlichen im Lot zu den Reibungsflächen der mindestens einen Reibungsscheibe (62) und der Zwischenflansche (60) der Überbrückungskupplung (20) sind, und dass die Bohrungen (104, 106) in Umfangsrichtung regelmäßig auf dem ersten Verbindungsteil (66) und/oder dem zweiten Verbindungsteil (70) verteilt sind.
